# EUROPEAN PATENT APPLICATION

(11) **EP 2 861 003 A1**
(43) Date of publication of application: **15.04.2015**
(21) Application number: 12879120.9
(22) Date of filing: 03.08.2012
(51) Int. Cl.: H04W 12/00

(54) **METHOD AND APPARATUS FOR CONTROLLING APPLICATION RIGHT**

(30) Priority: 12.06.2012 CN 201210192660
(71) Applicant: ZTE Corporation, Shenzhen, Guangdong 518057 (CN)
(72) Inventor: LU, Siyun, Shenzhen Guangdong 518057 (CN); ZHANG, Zhenzhi, Shenzhen Guangdong 518057 (CN); ZHONG, Sheng, Shenzhen Guangdong 518057 (CN)
(74) Representative: Modiano, Micaela Nadia
(86) International application number: PCT/CN2012/079659
(87) International publication number: WO 2013/185413

(57) **Abstract**

The present invention discloses a method and device for controlling permission of an application. The method includes: a trust level of an application is acquired according to signature information of the application, wherein the application includes at least one of the followings: an application to be downloaded, an application to be installed and an installed application; and controlling the permission of the application according to the trust level and a preset monitoring policy. Through the present invention, the problem that a security system for controlling permission of an application is absent in the related art, posing a huge security risk to the mobile terminal due to the vague permission of the application when the mobile terminal downloads and runs an application or in other processes is solved, and a relatively secure and comprehensive method for monitoring the application permission is provided to improve the performance of the mobile terminal.

## Description

### Technical Field

The present invention relates to the field of communications, and in particular to a method and device for controlling permission of an application.

### Background

With the advent of an intelligent era of a mobile terminal, the security of the mobile terminal cannot be ensured easily on a free and open intelligent mobile terminal platform because an application may be from many developers and varies in quality. A malicious code which may cause malicious deduction, interception of private information of a user and other behaviours may be embedded into the application software easily, thereby posing a threat to the security.

With relatively poor security monitoring capability, the current intelligent mobile terminal system may only ensure the detection of stability and data integrity of a download program but cannot verify the source of a mobile phone application effectively due to the lack of a comprehensive test and an effective verification mechanism; and moreover, it cannot monitor a security threat which may be posed to an installed application effectively, therefore, the security of the mobile terminal cannot be ensured effectively.

In the related art, a security system for controlling permission of an application is absent, posing a huge security risk to the mobile terminal due to the vague permission of the application when the mobile terminal downloads and runs an application or in other processes.

### Summary

The present invention provides a method and device for controlling a permission of an application, so as to at least solve the problem that a security system for controlling permission of an application is absent in the related art, posing a huge security risk to the mobile terminal due to the vague permission of the application when the mobile terminal downloads and runs an application or in other processes.

According to one aspect of the present invention, a method for controlling permission of an application is provided, wherein the method includes: a trust level of an application is acquired according to signature information of the application, wherein the application includes at least one of the followings: an application to be downloaded, an application to be installed and an installed application; and the permission of the application is controlled according to the trust level and a preset monitoring policy.

Preferably, acquiring the trust level of the application according to the signature information of the application may include : the signature information of the application is acquired; and the signature information is matched with at least one certificate public key of at least one preset certificate in a mobile terminal and the trust level is set for the application according to a matching result, wherein different matching results correspond to different trust levels.

Preferably, setting the trust level for the application according to the matching result may include: the number of at least one pair of matched signature information and certificate public key, or a name of a certificate is recorded; and the trust level of the application is set according to the number of the at least one pair or the name of the certificate.

Preferably, the permission of the application is controlled according to the trust level and the preset monitoring policy may include: it is detected whether a currently used permission of the application is one of permissions in a system default monitoring policy; and if so, a policy corresponding to the trust level is searched in the system default monitoring policy and the permission of the application is controlled according to the corresponding policy.

Preferably, searching for the policy corresponding to the trust level in the system default monitoring policy may include: it is detected whether there is an application monitoring policy corresponding to the currently used permission of the application, wherein the application monitoring policy is used for indicating a period during which usage condition of the permission is monitored; and if so, the policy corresponding to the trust level is searched in the application monitoring policy.

Preferably, after the permission of the application is controlled according to the trust level and the preset monitoring policy, the method may further include: a process of controlling the currently used permission of the application is saved and analyzed to acquire a processing policy; or, the process of controlling the current permission of the application is synchronized to a cloud server to acquire the processing policy.
according to another aspect of the present invention, a device for controlling permission of an application is provided. The device is applied to a mobile terminal and includes: an acquisition entity configured to acquire a trust level of an application according to signature information of the application, wherein the application includes at least one of the followings: an application to be downloaded, an application to be installed and an installed application; and a control entity configured to control the permission of the application according to the trust level and a preset monitoring policy.

Preferably, the acquisition entity may include: an acquisition unit configured to acquire the signature information of the application; a matching unit configured to match the signature information with at least one certificate public key of at least one preset certificate in a mobile terminal; and a setting unit configured to set the trust level for the application according to a matching result, wherein different matching results correspond to different trust levels.

Preferably, the control entity may include: a detecting unit configured to detect whether a currently used permission of the application is one of the permissions in a system default monitoring policy; a finding unit configured to search for a policy, which is corresponding to the trust level, in the system default monitoring policy when the current permission is one of permissions in the system default monitoring policy; and a control unit configured to control the permission of the application according to the corresponding found policy.

Preferably, the device may further include: a saving entity configured to save and analyze a process of controlling the currently used permission of the application to acquire a processing policy or synchronize the process of controlling the current permission of the application to a cloud server to acquire the processing policy.

In the present invention, the acquired trust level is added to the process of controlling the application permission and a corresponding monitoring policy is preset for the trust level. Through the present invention, the problem that a security system for controlling permission of an application is absent in the related arts, posing a huge security risk to the mobile terminal due to the vague permission of the application when the mobile terminal downloads and runs an application or in other processes is solved, and a relatively secure and comprehensive method for monitoring the application permission is provided to improve the performance of the mobile terminal.

### Brief Description of the Drawings

Drawings, provided for further understanding of the present invention and forming a part of the specification, are used to explain the present invention together with embodiments of the present invention rather than to limit the present invention, wherein:
Fig. 1 is a flowchart of a method for controlling permission of an application according to an embodiment of the present invention;
Fig. 2 is a diagram showing the flow of acquiring a trust level of an application according to a first preferred embodiment of the present invention;
Fig. 3 is a flowchart of a method for generating a system default monitoring policy according to a first preferred embodiment of the present invention;
Fig. 4 is a flowchart of a process of generating an application control policy according to a first preferred embodiment of the present invention;
Fig. 5 is a diagram showing the flow of monitoring permission of an application according to a first preferred embodiment of the present invention;
Fig. 6 is a flowchart of a process of generating a system default monitoring policy according to a second preferred embodiment of the present invention;
Fig. 7 is a diagram showing the flow of monitoring permission of an application according to a second preferred embodiment of the present invention;
Fig. 8 is a first block diagram showing the structure of a device for controlling permission of an application according to an embodiment of the present invention;
Fig. 9 is a second block diagram showing the structure of a device for controlling permission of an application according to an embodiment of the present invention;
Fig. 10 is a third block diagram showing the structure of a device for controlling permission of an application according to an embodiment of the present invention;
Fig. 11 is a fourth block diagram showing the structure of a device for controlling permission of an application according to an embodiment of the present invention; and
Fig. 12 is a diagram showing the structure of a device for controlling permission of an application according to a third embodiment of the present invention.

### Detailed Description of the Embodiments

The preferred embodiments are described in conjunction with the drawings as follows. It shall be understood that the preferred embodiments described herein are only used to describe and explain the present invention and shall not be construed as improper limitations on the same. The embodiments of the present application and the features of the embodiments can be combined with each other if there is no conflict.

In the related art, the mobile terminal is relatively poor in the application monitoring capability. It is mainly manifested in the following aspects: (1) a trust level of an application, which is essential for monitoring the permission effectively, cannot be supported and verified effectively, so that the permission of the application cannot be monitored well by classification; (2) there are relatively many permissions needing monitoring by default and the monitoring is too complicated, but only some permissions are monitored according to the actual requirements of a user; and (3) an open platform is relatively open so that the control for the permission of the application in the mobile terminal is relatively flexible and most of permission application developers may achieve acquisition only by statement. For example, the sensitive permissions of a mobile phone device, involving a permission referring to charging of a user (including sending a message, making a call, surfing on an internet and the like), a permission for private information of a user (including a message record, a contact record, a call record and the like), a permission for local connection of a mobile phone device (including WIFI connection, Bluetooth connection and the like) is not monitored effectively.

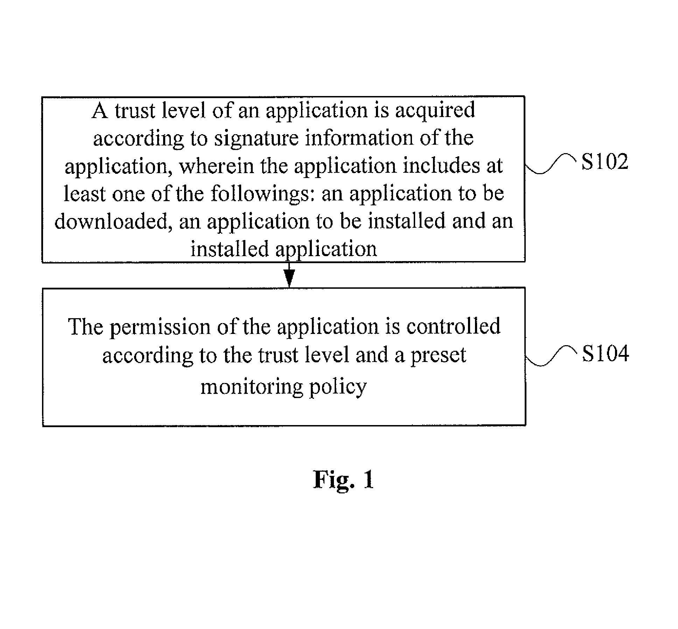

To solve the problems above, an embodiment of the present invention provides a method for controlling permission of an application. The flow of the method is as shown in Fig. 1, including Steps S102-S104.

Step S102: A trust level of an application is acquired according to signature information of the application, wherein the application includes at least one of the followings: an application to be downloaded, an application to be installed and an installed application.

Step 104: The permission of the application is controlled according to the trust level and a preset monitoring policy.

In the embodiment, the acquired trust level is employed in a process of controlling the application permission and a corresponding monitoring policy is preset for the trust level, so that the problem that a security system for controlling permission of an application is absent in the related arts, posing a huge security risk to the mobile terminal due to the vague permission of the application when the mobile terminal downloads and runs an application or in other processes is solved, and a relatively secure and comprehensive method for monitoring the application permission is provided to improve the performance of the mobile terminal.

In the implementation process, acquiring the trust level of the application according to the signature information of the application may include: the signature information of the application is acquired; and the signature information is matched with at least one certificate public key of at least one preset certificate in a mobile terminal and the trust level is set according to a matching result, wherein different trust levels correspond to different matching results.

Setting the trust level for the application according to the matching result may further include: the number of at least one pair of matched signature information and certificate public key, or a name of a certificate is recorded; and the trust level of the application is set according to the number of the at least one pair or the name of the certificate. In the implementation process, the trust level may be presented in a trusted form and an un-trusted form or in a form of different trust levels, such as trust level 1 and trust level 2.

In the implementation process, when the trust level is presented in a form of different trust levels, there are two conditions. The first condition is that the trust level may be set according to the name of the certificate, such as a "manufacturer trust level", an "operator trust level" and a "third-party partner trust level", so that the trust level corresponding to a certificate may be acquired when the signature information is authenticated successfully by the certificate. The second condition is that the trust level may also be set according to the number of different authentication certificates by which the signature information is authenticated successfully. For example, if the signature information is authenticated successfully by one authentication certificate, the trust level is set to 1, namely, trust level 1; or, the application is set to level 2 if the signature information is authenticated by two authentication certificates.

When the trust level is presented in a trusted form and an un-trusted form, a matching threshold may be set; namely, when the number of at least one pair of matched signature information of the application and certificate public key reaches a preset value, it is determined that the trust level of the application is a trusted level; and when the trusted application uses a sensitive permission, its operation permission may not be controlled. The matching threshold may be further set to pass a fixed certificate. For example, after the signature information of the application is matched with an operator certificate, it is determined that the trust level of the application is a trusted level, and the trust level is regarded to be an un-trusted level if the signature information of the application is not authenticated by the operator certificate. The trust level may be set correspondingly according to different requirements of different users.

After the step S102 is performed, it is detected whether the currently used permission of the application is one of permissions in the system default monitoring policy. If yes, it is indicated that the currently used permission is a valued permission of the user, the policy corresponding to the trust level is searched in the system default monitoring policy, and the permission of the application is controlled according to the corresponding found policy. If it is not one the permissions in the system default monitoring policy, the currently used permission may not be controlled.

When the currently used permission is one of permissions in the system default monitoring policy, it is necessary to search the policy, which is corresponding to the trust level of the application, in the system default monitoring policy. In the execution process, it is necessary to detect whether there is an application monitoring policy corresponding to the currently used permission. If there is the application monitoring policy corresponding to the currently used permission, the policy corresponding to the trust level may be searched in the application monitoring policy. For example, when it is detected that a player, the trust level of which is 3, accesses a contact database, it is detected whether accessing contact database is one of permissions in the system default monitoring policy. If yes, the control policy of the player, the trust level of which is 3, is searched in the system default monitoring policy. If the trust level 3 or a higher level is corresponding to a policy that the sensitive permission is allowed, the player is not controlled when accessing the contact database. If the trust levels 1-3 are corresponding to a policy that the sensitive permission is not allowed, a control process is recorded or an alarm is given when the player accesses the contact database or the alarm is recorded at the same time.

In an embodiment, when the mobile terminal detects that a game application uses an internet permission, which is a sensitive permission, at 3 a.m., the process of using the internet permission is recorded for further processing.

If there is no application monitoring policy for the currently used permission, a prompt dialog box may pop up in the system to remind a user and wait to receive the setting of the application monitoring policy made by the user. Then, the monitoring setting of the permission made by the user (a full-time monitoring/a full-time non-monitoring/a periodic monitoring) is converted into the application monitoring policy used by the permission, and a monitoring policy record value recorded by the system is saved and updated. At the moment, the system has the application monitoring policy and the used permission may be monitored according to the policy.

After the steps above are ended, the process of controlling the currently used permission of the application may be analyzed to acquire a processing policy or is synchronized to a cloud server to acquire the processing policy. If the permission of the application is analyzed locally, the record of the analyzing process may be presented to a user to be processed according to the actual condition; and if the process of controlling the currently used permission of the application is synchronized to the cloud server to acquire the processing policy, the cloud server analyzes it according to the synchronized process and sends the analysis result to a mobile terminal so that the user carries out processing according to the processing policy acquired by the analysis of the cloud server.

### Preferred embodiment I

A preferred embodiment provides a method for controlling permission of an application. In the preferred embodiment, a mobile terminal, which is a mobile phone, is taken as an example for description.

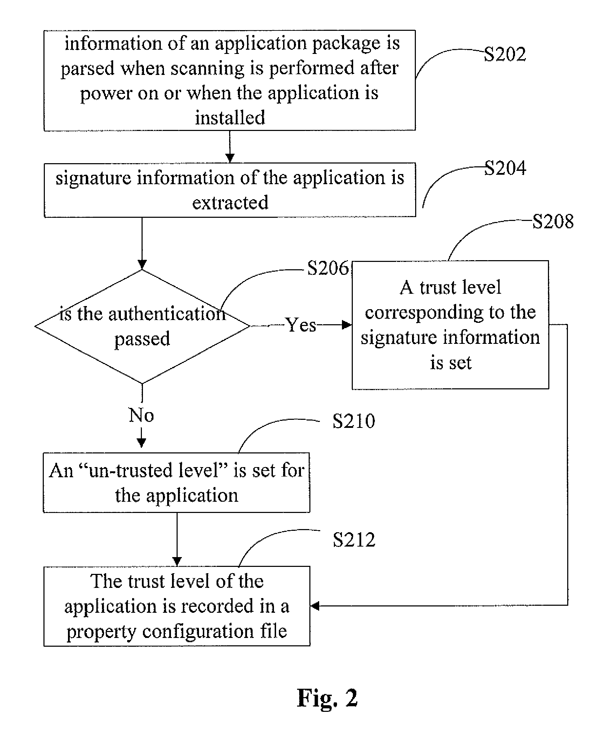

Fig. 2 shows the flow of acquiring a trust level of an application, and the method includes steps S202-S212.

Step S202: information of an application package is parsed when scanning is performed after power on or when the application is installed. When the application is scanned after power on or a new application is installed, the application package is uncompressed and then the information of the application package is parsed.

Step S204: signature information of the application is extracted according to a parsing result of the application package and then the signature information of the application is recorded.

Step S206: The signature information of the application is authenticated by comparing with at least one public key file of at least one preset digital certificate in a mobile phone and it is detected whether the authentication is passed. If the authentication is passed, the step S208 is performed; otherwise, the step 210 is performed.

Step S208: A trust level corresponding to the digital certificate which passes the authentication is set, such as a "manufacturer trust level", an "operator trust level" and a "third-party partner trust level"; or, the trust level may also be set according to the number of different authentication certificates by which the signature information of the application is successfully authenticated. For example, the trust level is set to 1 when the signature information of the application is authenticated by one authentication certificate, namely, trust level 1, or the trust level of the application is set to 2 when the signature information of the application is authenticated by two authentication certificates. After the step S208 is performed, the step S212 is performed.

Step S210: An "un-trusted level" is set for the application.

Step S212: The trust level of the application obtained by authentication is recorded in a property configuration file corresponding to the application, wherein the trust level of the application is taken as a normal property of the application.

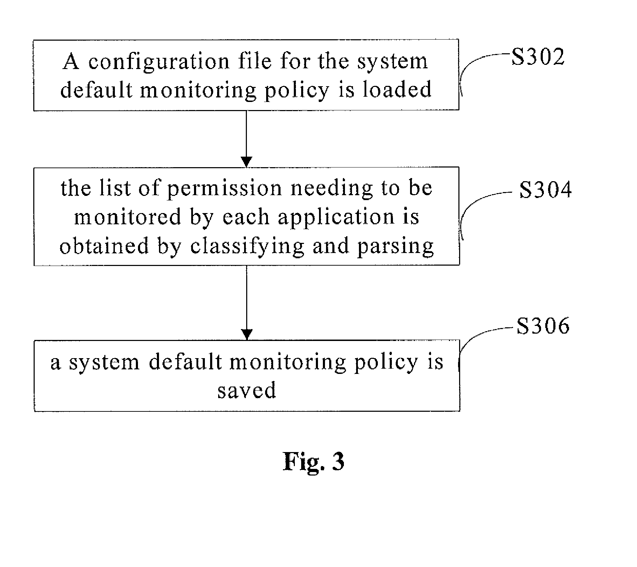

As shown in Fig. 3, which is a flowchart of a method for generating a system default monitoring policy, the flow includes steps S302-S306.

Step S302: A configuration file for the system default monitoring policy is loaded. In the implementation, the preset configuration file for the system default monitoring policy is loaded to a specified directory of the system when an initialization is performed after power on.

Step S304: The configuration file for the system default monitoring policy is parsed to acquire a list of permission needing to be monitored by each application entity.

Step S306: The parsed list of permission needing to be monitored by each application entity is recorded to a data structure in the memory to generate a system default monitoring policy.

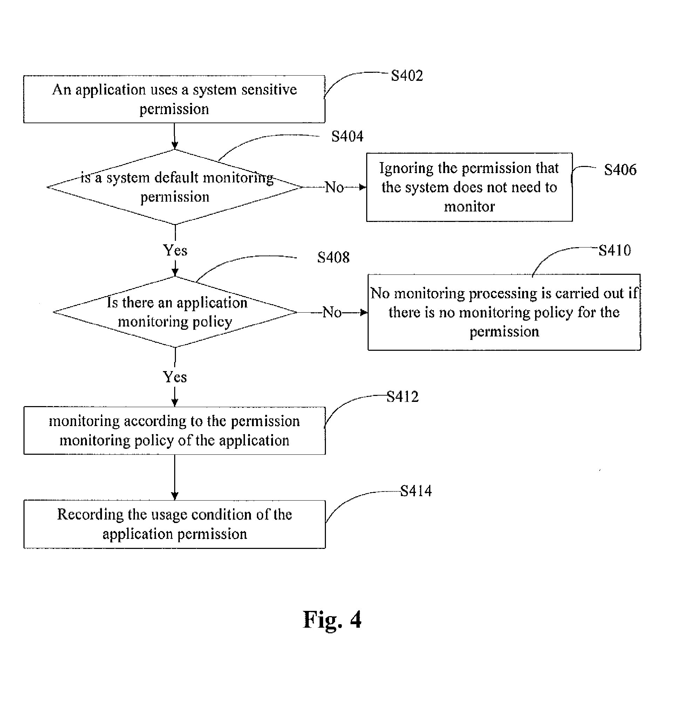

Fig. 4 is a flowchart of a process of generating an application control policy, and the flow includes steps S402-S414.

Step S402: When it is monitored that the current application uses a sensitive permission in the system, the step S404 is performed. The sensitive permission may be customized according to the requirements of a user, such as a permission referring to the charging of the user or a permission referring to the private information of the user.

Step S404: it is detected whether the currently used permission belongs to one of permissions needing to be controlled by the system default control policy. If so, turn to the step S408. If not, turn to the step S406.

Step S406: The currently used permission, which is not belonging to the permissions needing to be monitored by the system default monitoring policy, is not monitored.

Step S408: it is detected whether there is an application monitoring policy for the currently used permission. If there is no application monitoring policy for the currently used permission, the step S410 is performed; otherwise, the step S412 is performed.

Step S410: If there is no application monitoring policy for the currently used permission, monitoring processing is omitted.

Step S412: Monitoring is carried out according to the application monitoring policy.

Step S414: Usage condition of the permission is recorded.

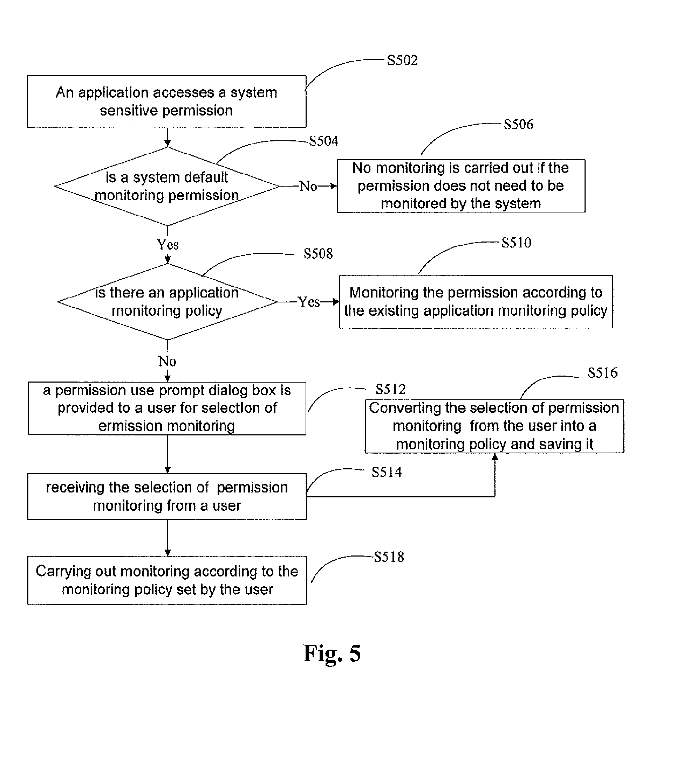

Fig. 5 shows an overall flow of monitoring permission of an application, and the whole monitoring process is described below in combination with Fig. 5.The process includes steps S502-S518.

Step S502: When it is monitored that a sensitive permission of an application is accessed, the step S504 is performed.

Step S504: it is detected whether the currently used permission belongs to the permissions needing to be controlled by a system default control policy. In the implementation process of the step, it is necessary to search the currently used permission in the system default control policy. If the currently used permission does not belong to the permissions in the system default control policy, the step S506 is performed; otherwise, the step 508 is performed.

Step S506: The currently used permission, which does not belong to the permissions needing to be controlled by the system default control policy, is not monitored. For example, when the sensitive permission accessed by a user refers to a local connection permission of a mobile phone device, the currently used permission, which is not in the system default control policy, is not controlled.

Step S508: it is detected whether there is an application monitoring policy for the currently used permission. If there is the application monitoring policy for the currently used permission, the step S510 is performed; otherwise, the step S512 is performed.

Step S510: the application monitoring policy for the currently used permission is acquired and the currently used permission is monitored according to the application monitoring policy.

Step S512: if there is no corresponding application monitoring policy for the currently used permission, a prompt dialog box pops up to remind the user that a sensitive permission of the system is being used, and the sensitive permission is not monitored to wait to receive further setting of the permission monitoring made by the user.

Step S514: The setting for the application monitoring policy made by the user is received.

Step S516: The monitoring setting for the currently used permission made by the user is converted into the application monitoring policy for the currently used permission, and a monitoring policy record value recorded by the system is saved and updated, wherein the monitoring setting may be a full-time monitoring, a full-time a non-monitoring, periodic monitoring and other settings.

Step S518: Monitoring is carried out according to the application monitoring policy set by the user.

By implementing the preferred embodiment, applications in the mobile phone terminal may classified based on the trust level effectively and the sensitive permissions are classified to be managed according to the classification of trust levels of the applications. Furthermore, the control for the sensitive permission of a mobile phone may be customized and adjusted dynamically according to different control requirements of a manufacturer or a user. By adopting the embodiment, the user can manage and control a key sensitive permission group in the mobile phone terminal easily and manage and control a security threat possibly posed to the mobile phone application effectively, thereby ensuring the security of the mobile phone effectively.

### Preferred embodiment II

Through an embodiment of the present invention, a sensitive permission group in an intelligent mobile phone which may be subjected to malicious intrusion most frequently and needs high protection most may be monitored by software. The permission group to be monitored may include: a permission of sending a message, a permission of making a call, a permission of accessing and controlling network flow, a permission of accessing a contact record, a permission of accessing a message record, a permission of accessing mobile phone device information, a permission of accessing geographic location information, a permission of establishing WIFI connection and a permission of establishing Bluetooth connection. In the implementation process, the monitoring for the permission, which is an "un-trusted application", is taken as an example for description, and the application permissions in other trust levels all adopt similar monitoring principles and processing flow.

In the preferred embodiment, a system default monitoring policy is set. Such permissions as a permission of sending a message, a permission of making a call and a permission of accessing network flow are added to the permissions needing to be controlled, wherein the permissions needing to be controlled are corresponding to an "un-trusted application trust level". A file is configured and is defined in an xml file format. The content of the defined configuration file is as follows:
<?xml version='1.0' encoding='utf-8' standalone='yes' ?>
<sysControlPermission>
   <trustLevel name="unApproved">
   <permission name=" SEND_SMS" />
   <permission name=" CALL_PHONE" />
<permission name="ACCESS_ INTERNET" />
<permission name="ACCESS_MESSAGE" />
   <permission name=" ACCESS_CONTACTS" />
<permission name=" ACCESS_CALLLOG" />
<permission name=" ACCESS_LOCATION" />
<permission name=" ACCESS_DEVICE_INFO" />
<permission name="WIFI" />
   <permission name=" BLUETOOTH" />
   </trustLevel >
</sysControlPermission>

A sysControlPermission tag represents a system default control permission; a trustLevel tag represents a permission trust level; "unApproved" indicates that the permission is un-trusted and needs monitoring; a permission tag represents a permission needing to be monitored in a trust level; SEND_SMS represents a permission of sending a message; CALL_PHONE represents a permission of making a call; ACCESS_ INTERNET represents a permission of accessing network flow; ACCESS_MESSAGE represents a permission of accessing a message record; ACCESS_CONTACTS represents a permission of accessing a contact record; ACCESS_MESSAGE represents a permission of accessing a message record; ACCESS_CALLLOG represents a permission of accessing a call log; ACCESS_LOCATION represents a permission of accessing personal geographic location information (including GPS positioning and base station positioning); ACCESS_DEVICE_INFO represents a permission of accessing mobile phone device information (including IMEI, IMSI, own number and the like); WIFI represents a permission of establishing a local network connection through WIFI; and BLUETOOTH represents a permission of establishing a local connection through Bluetooth. Preferably, the listed monitoring permission may be added, deleted or modified as required, and the control principle and flow are similar.

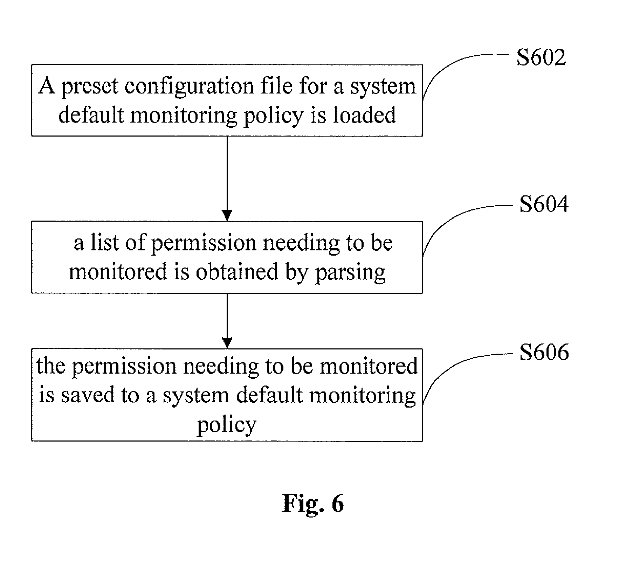

As shown in Fig. 6, which is a flowchart of a process for generating a system default monitoring policy, the flow includes steps S602-S606.

Step S602: A preset configuration file for a system default monitoring policy is loaded to a specified directory of the system during the initialization when the system is started.

Step S604: The configuration file for the system default monitoring policy is parsed to acquire a list of permission needing to be monitored in an "un-trusted monitoring permission".

Step S606: The parsed list of permission needing to be monitored is recorded in a memory to form a system default monitoring policy.

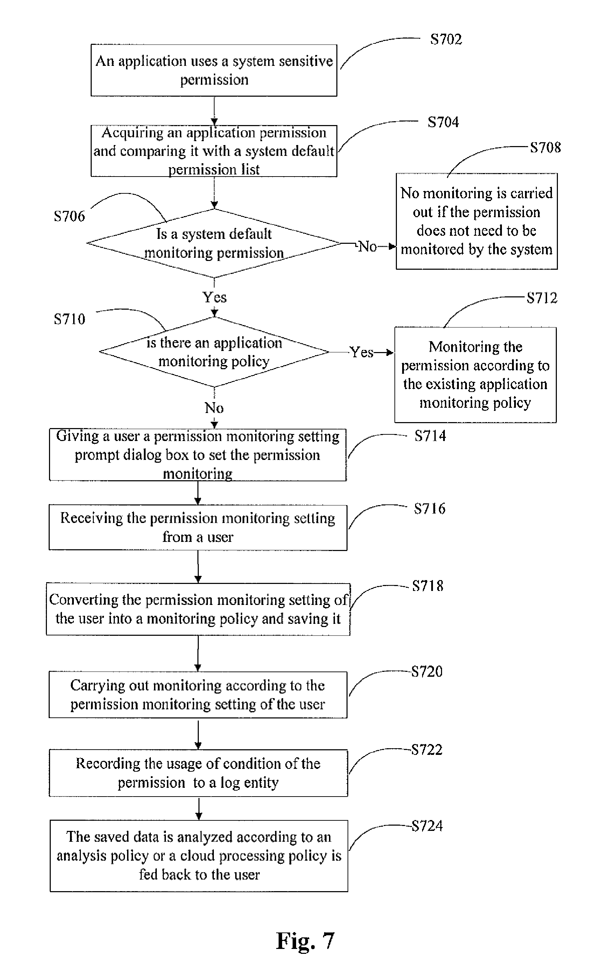

The preferred embodiment is described below in combination with Fig. 7.In Fig. 7 and the flow of monitoring permission of an application includes steps S702-S724.

Step S702: When it is monitored that permission is used by an application, the step S704 is performed. For example, when it is recorded that a player application accesses a contact database in its service process, the step S704 is performed.

Step S704: The currently used permission of the application is acquired and is compared with a system default permission list.

Step S706: it is detected whether the currently used permission belongs to the permissions controlled by the system by default. If it does not belong to the permission controlled by the system by default, the step S708 is performed; and if it belongs to the permission controlled by the system by default, the step S710 is executed.

Step S708: The usage condition of the currently used permission is not monitored because the permission does not belong to the permissions controlled by the system by default.

Step S710: it is detected whether there is an application monitoring policy for the currently used permission. If so, the step S712 is performed; otherwise, the step S714 is performed.

Step S712: An application monitoring policy for the currently used permission is acquired and the currently used permission is monitored according to the application monitoring policy.

Step S714: There is no application monitoring policy for the currently used permission, so that a prompt dialog box may pop up in the system to remind a user to wait to receive the setting of the application monitoring policy which is for the currently used permission and is made by the user.

Step S716: the application monitoring policy for the currently used permission is received from the user.

Step S718: The setting of the application monitoring policy which is for the currently used permission and is made by the user (a full-time monitoring/a full-time non-monitoring/a periodic monitoring) is converted into the application monitoring policy for the currently used permission, and a monitoring policy record value recorded by the system is saved and updated.

Step S720: The currently used permission is monitored according to the choice of the user.

Step S722: The monitoring information is saved or synchronized to a cloud server.

Step S724: The saved data is analyzed according to an analysis policy or a cloud processing policy is fed back to the user.

In the preferred embodiment, the permissions of different applications may be well controlled; the permission (such as a permission of sending a message, a permission of making a call and a permission of accessing network flow) of an application in a mobile phone may be monitored and managed respectively; and the application monitoring policy for the permission of the application may be adjusted flexibly according to the actual monitoring requirement and scenario of the user. In the preferred embodiment, the permission of a mobile phone terminal may be monitored and managed and such security threat behaviour as malicious intrusion of the mobile phone terminal may be effectively found and instantly reminded and prevented, so that the security of the permission of the mobile phone terminal may be ensured effectively.

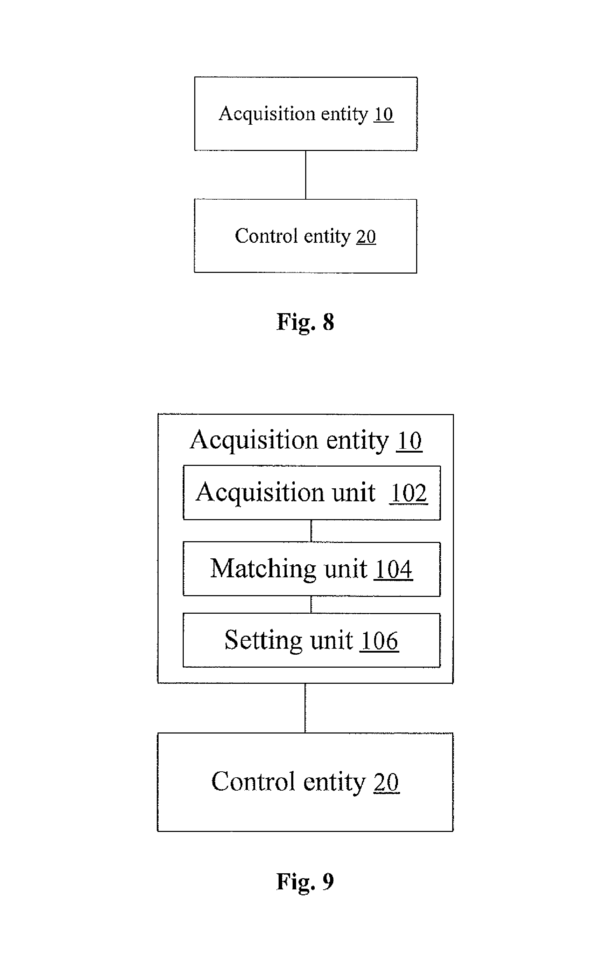

An embodiment of the present invention further provides a device for controlling permission of an application. The device may be configured to detect the security of the application permission in a mobile terminal. The block diagram showing the structure of the device is shown in Fig. 8, including: an acquisition entity 10 configured to acquire a trust level of an application according to signature information of the application, wherein the application includes at least one of the followings: an application to be downloaded, an application to be mounted and an installed application; and a control entity 20 coupled with the acquisition entity 10 and configured to control the permission of the application according to the trust level and a preset monitoring policy.

The acquisition entity 10 of the device shown in Fig. 9 may include: an acquisition unit 102 configured to acquire the signature information of the application; a matching unit 104 coupled with the acquisition unit 102 and configured to match the signature information with at least one certificate public key of at least one preset certificates in the mobile terminal; and a setting unit 106 coupled with the matching unit 104 and configured to set the trust levels for the application according to a matching result, wherein different trust levels corresponds to different matching results.

In the implementation process, the acquisition entity 10 may be further configured to record the number of at least one pair of matched signature information and certificate public key and to set the trust level of the application according to the number of at least one pair of matched signature information and certificate public key.

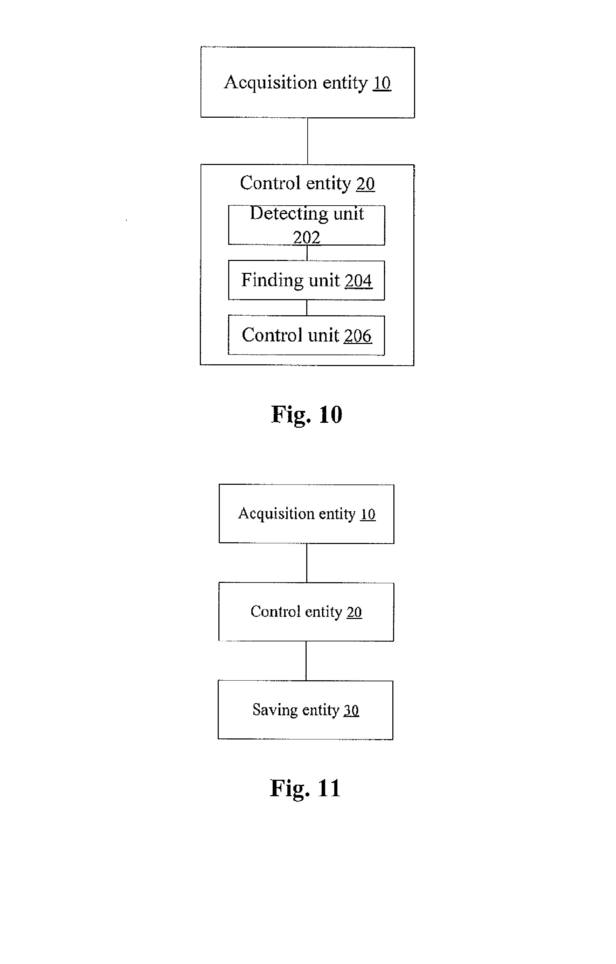

In a preferred embodiment, the device for controlling the permission of the application may be as shown in Fig. 10. Its control entity 20 may include: a detecting unit 202 configured to detect whether a currently used permission of the application is one of permissions in the system default monitoring policy; a finding unit 204 coupled with the detecting unit 202 and configured to search a policy ,which is corresponding to the trust level, in the system default monitoring policy when the currently used permission is one of the permissions in the system default monitoring policy; and a control unit 206 coupled with the finding unit 204 and configured to control the permission of the application according to the corresponding found policy.

In the implementation process, the control entity 20 may be further configured to detect whether there is an application monitoring policy for the currently used permission of the application; and if so, the policy corresponding to the trust level is searched in the application monitoring policy.

The device for controlling the permission of the application shown in Fig. 11 may further include a saving entity 30 coupled with the control entity 20 and configured to save and analyze a process of controlling the currently used permission of the application to acquire a processing policy or synchronize the process of controlling the currently used permission of the application to a cloud server to acquire the processing policy.

The device for controlling the permission of the application in the embodiment above is described below in combination with the drawings and a preferred embodiment.

### Preferred embodiment III

The preferred embodiment provides a device for controlling permission of an application. The device is implemented based on a mechanism that trust levels of applications are classified according to the signature authentication, and applications preset/installed in a mobile phone may be effectively classified based on the trust levels. An application monitoring policy is established for the permission of the application needing to be monitored, the application monitoring policy may be configured according to the requirements of a user, namely, the permissions to be monitored for each application may be adjusted flexibly. At the same time, it has the capability of setting the application monitoring policy for a monitoring unit based on the application, namely, a user may define the application monitoring policy for the application according to the actual requirement; and based on the support of the mechanisms that are the trust level of the application and the application monitoring policy of permission and log analysis policy mechanism, the key sensitive permission of a system of a mobile phone may be monitored dynamically.

In the preferred embodiment, the names of respective entities are slightly different from the names of entities in the device in the embodiments above, but the combination of respective entities in the embodiment may implement the same function as the device in the embodiment above. The embodiment includes the following entities:
(1) an authentication entity configured to implement a authentication function of a trust level of an application, to parse signature information of the application and authenticate the signature information by comparing with at least one preset certificate of the mobile phone (including a "manufacture signature certificate" preset, an "operator signature certificate" preset, a "third-party partner signature certificate" preset and the like) when an application is scanned or downloaded for installation in a mobile phone when power on, and to set different trust levels for applications according to the authentication results of the signature information of the application and the certificate public key;
(2) a monitoring policy entity configured to divide the application monitoring policy of the permission of the application into two management policy systems: a " system default monitoring policy" and an "application monitoring policy" through a policy defining mechanism based on a configuration file, wherein the " system default monitoring policy" defines the sensitive permissions needing to be monitored for the application in each level and is obtained by parsing a preset policy configuration file during the initialization of the system; and the "application monitoring policy" records the monitoring policy for each sensitive permission (a full-time monitoring/a full-time non-monitoring/a periodic monitoring) for each specific application and is specifically generated by dynamically recording the permission monitoring setting operation of the user;
(3) a permission use log entity configured to save monitoring flow and dynamically monitor a sensitive permission group which may be abused most easily and needs high protection of a mobile phone under the support of the application trust level extended by (1) and (2) and the monitoring policy mechanism; when a system sensitive permission is used by an application, firstly, the permission monitoring entity may acquire the trust level of the application; secondly, a specific monitoring policy of the permission is determined by the monitoring policy entity according to the trust level of the application; the currently used permission of the application is monitored according to a confirmed monitoring policy, wherein the monitoring form includes a full-time monitoring, a full-time non-monitoring and a periodic monitoring; and when the monitoring form is not found, a corresponding "application control policy" is dynamically saved/updated according to the setting of the user after a prompt pops up and the monitored usage condition of the permission of the application is recorded to a log to be saved locally or updated to the cloud server; and finally, the usage condition of the permission of the application is fed back to the user according to a local log analysis policy or a processing suggestion returned by the cloud server; and
(4) a permission use monitoring entity configured to implement background monitoring operation.

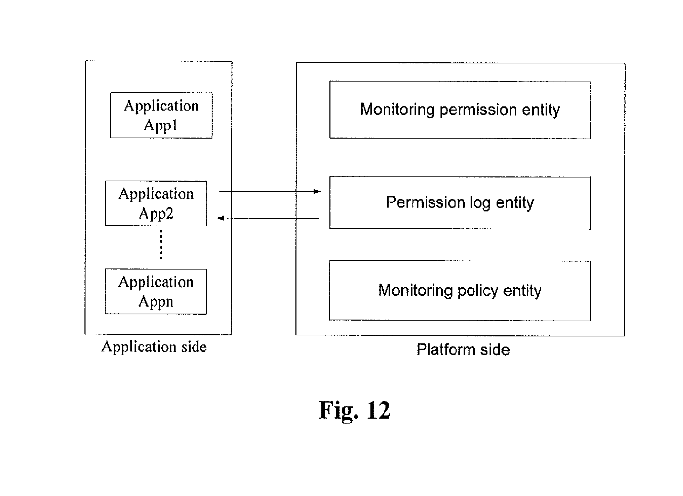

In the specific implementation process, the diagram showing the structure of the preferred embodiment may be as shown in Fig. 12. When the system is initialized, the monitoring policy entity is called and a preset monitoring policy configuration file is loaded and parsed; and then the system default monitoring permission policy is generated according to the parsing result.

When the system is started, the authentication entity is called and then the monitoring permission entity is loaded for background monitoring. When it is monitored that the application uses the key sensitive permission of the mobile phone, the usage condition of the permission may be transmitted to the permission log entity to be recorded; and then the analysis process is performed by the analyzing permission policy entity. The monitoring permission entity cooperates with the permission log entity and the monitoring policy entity to finally monitor the usage condition of the application permission and provide a suggestion to the user.

It can be seen from the above that the embodiments above implement at least one of the following technical effects.

The present invention adopts the following method that the acquired trust level is employed in a process of controlling the application permission and a corresponding monitoring policy is preset for the trust level. Through the present invention, the problem that a security system for controlling permission of an application is absent in the related arts, posing a huge security risk to the mobile terminal due to the vague permission of the application when the mobile terminal downloads and runs an application or in other processes is solved, and a relatively secure and comprehensive method for monitoring the application permission is provided to improve the performance of the mobile terminal.

Obviously, those skilled in the art shall understand that the entities or steps of the present invention may be implemented by general computing device and centralized in a single computing device or distributed in a network consisting of multiple computing devices. Optionally, the entities or steps may be implemented by program codes executable by the computing device, so that they may be stored in a storage device and executed by the computing device, and, in some cases, the steps can be executed in a sequence different from the illustrated or described sequence, or they are respectively made into the integrated circuit entities or many of them are made into a single integrated circuit entity. By doing so, the present invention is not limited to any specific combination of hardware and software.

The above are only the preferred embodiments of the present invention and not intended to limit the present invention. For those skilled in the art, various modifications and changes can be made in the present invention. Any modifications, equivalent replacements, improvements and the like within the spirit and principle of the present invention shall fall within the scope of protection of the present invention.

## Claims

1. A method for controlling permission of an application, **characterized by** comprising:
acquiring a trust level of the application according to signature information of the application, wherein the application comprises at least one of the followings:
an application to be downloaded, an application to be installed and an installed application; and
controlling the permission of the application according to the trust level and a preset monitoring policy.

2. The method according to claim 1, **characterized in that** acquiring the trust level of the application according to the signature information of the application comprises:
acquiring the signature information of the application; and
matching the signature information with at least one certificate public key of at least one preset certificate in a mobile terminal and setting the trust level for the application according to a matching result, wherein different matching results correspond to different trust levels.

3. The method according to claim 2, **characterized in that** setting the trust level for the application according to the matching result comprises:
recording the number of at least one pair of matched signature information and certificate public key, or a name of a certificate; and
setting the trust level of the application according to the number of the at least one pair or the name of the certificate.

4. The method according to any one of claims 1 to 3, **characterized in that** controlling the permission of the application according to the trust level and the preset monitoring policy comprises:
detecting whether a currently used permission of the application is one of permissions in a system default monitoring policy; and
if the currently used permission of the application is one of permissions in the system default monitoring policy, searching a policy, which is corresponding to the trust level, in the system default monitoring policy and controlling the permission of the application according to the found corresponding policy.

5. The method according to claim 4, **characterized in that** searching the policy, which is corresponding to the trust level, in the system default monitoring policy comprises:
detecting whether there is an application monitoring policy corresponding to the currently used permission of the application, the application monitoring policy being used for indicating a period during which usage condition of the permission is monitored; and
if there is the application monitoring policy corresponding to the current permission of the application, searching the policy, which is corresponding to the trust level, in the application monitoring policy.

6. The method according to claim 1, **characterized in that** after the permission of the application is controlled according to the trust level and the preset monitoring policy, the method further comprises:
saving and analyzing a process of controlling the currently used permission of the application to acquire a processing policy; or, synchronizing the process of controlling the current permission of the application to a cloud server to acquire the processing policy.

7. A device for controlling permission of an application, **characterized in that** the device is provided on a mobile terminal and comprises:
an acquisition entity configured to acquire a trust level of the application according to signature information of the application, wherein the application comprises at least one of the followings: an application to be downloaded, an application to be installed and an installed application; and
a control entity configured to control the permission of the application according to the trust level and a preset monitoring policy.

8. The device according to claim 7, **characterized in that** the acquisition entity comprises:
an acquisition unit configured to acquire the signature information of the application;
a matching unit configured to match the signature information with at least one certificate public key of at least one preset certificate in a mobile terminal;
a setting unit configured to set the trust level for the application according to a matching result, wherein different matching results correspond to different trust levels.

9. The device according to claim 7 or 8, **characterized in that** the control entity comprise:
a detecting unit configured to detect whether a currently used permission of the application is one of permissions in a system default monitoring policy;
a finding unit configured to search a policy, which is corresponding to the trust level, in the system default monitoring policy when the currently used permission is one of the permissions in the system default monitoring policy; and
a control unit configured to control the permission of the application according to the corresponding found policy.

10. The device according to claim 7, **characterized by** further comprising:
a saving entity configured to save and analyze a process of controlling the currently used permission of the application to acquire a processing policy, or to synchronize the process of controlling the current permission of the application to a cloud server to acquire the processing policy.
